# EUROPEAN PATENT APPLICATION

(11) **EP 2 080 899 A1**
(43) Date of publication of application: **22.07.2009**
(21) Application number: 08000841.0
(22) Date of filing: 17.01.2008
(51) Int. Cl.: F03D 1/00, F03D 3/00, F03D 3/06, F03D 11/02

(54) **An offshore wind turbine with a rotor integrated with a floating and rotating foundation**

(71) Applicant: Danmarks Tekniske Universitet - DTU, 2800 Kgs. Lyngby (DK)
(72) Inventor: Pedersen, Troels Friis, 4000 Roskilde (DK)
(74) Representative: Sundien, Thomas

(57) **Abstract**

This invention relates to an offshore wind turbine comprising a rotor, a floating and rotating foundation, an anchoring part and a shaft generator wherein said wind turbine is anchored offshore to the bottom of the sea by said anchoring part. The rotor and the main part of said floating foundation are integrated and constitute a rotor part, where energy can be generated based on the rotation of said rotor part, and wherein said rotor part and said anchoring part are rotatable connected via the shaft of said generator, and wherein said anchoring part comprises a torque leveler for compensating the torque from the rotating rotor part. The invention further relates to a rotor part, an anchoring part and a water brake part.

## Description

### FIELD OF THE INVENTION

The focus on alternative energy is constantly increasing and a number of different energy sources are today exploited and used, the alternative sources comprise e.g. hydro energy, wind energy and solar energy. Especially the focus on the usage of wind energy has grown and an increasing number of wind turbines are installed all over the world. In particular the popularity of offshore wind turbines is increasing.

Today, horizontal axis wind turbines (HAWT) are positioned on foundations on the sea bed. There exist floating foundations for horizontal axis wind turbines which with a floating foundation reaches into the sea with a counterbalance and which is supported by anchors (WO 03/004869A1, WO 2006/132539A1). Another solution is a floating foundation which is supported by another tube going directly to the seabed, where a suction foundation sucks the whole construction downwards (US 7,156,037 B2). These types of floating foundations use conventional horizontal axis wind turbines (HAWT).

A HAWT is sensitive to wind direction in comparison with the vertical axis wind turbines (VAWT). A yawing mechanism is necessary for positioning the rotor into the wind and if misalignment is present, cyclic loads are introduced and the power production is reduced. A conventional HAWT wind turbine also has the drive train (rotor, shaft bearings, and generator/gearbox) and yaw bearings and auxiliary equipment in the nacelle at hub height. This means that a considerable mass is positioned at the top of the tower which is very unfavourable for the stability of a floating foundation

### OBJECT AND SUMMARY OF THE INVENTION

The object of the invention is to solve the above-mentioned problems.

This is obtained by an offshore wind turbine comprising a rotor, a floating foundation, an anchoring part, a shaft generator part and a water brake part, wherein said wind turbine is anchored offshore to the bottom of the sea by said anchoring part. The rotor and the main part of said floating foundation is integrated and constitutes a rotor part where energy can be generated based on the rotation of said rotor part, and wherein said rotor part and said anchoring part are rotatable connected via the shaft of said shaft generator, and wherein said anchoring part comprises a torque leveler for compensating the torque from the rotating rotor part.

The invention solves a bearing problem with conventional wind turbines. Foundations of offshore wind turbines must be floating when on deep water. In the present invention the floating foundation and the rotor are integrated. The wind turbine rotor part continues deep into the sea and the foundation rotates with the wind turbine rotor. The water is as a kind of bearing support for the rotating foundation, which must be axisymmetric to minimize friction with the water.

The present invention uses primarily vertical axis wind turbines (VAWT), but a special version of a horizontal axis wind turbine (HAWT) can be used. The present invention uses wind turbine rotors that during operation generate thrust and torque. This thrust and torque are transferred through the rotating and floating foundation and is absorbed by a reaction force from the anchor part and buoyancy forces from the water. This will have the effect that the shaft axis will tilt dependent on the wind speed and loading of the rotor. For vertical axis wind turbines (VAWT), the axis may be tilted up to 30° or more. For the special case of a horizontal axis wind turbine the flexible shaft may have the foundation part being tilted by 30° or more, while the shaft at the rotor is flexed 60° or less compared to the foundation part. The orientation of the axis of vertical axis wind turbines (VAWT) and horizontal axis wind turbines (HAWT) of this invention should therefore not be considered literally. Therefore, another terminology will be used in the following, where the vertical axis wind turbine rotor (VAWT) is called a cross flow rotor, while a horizontal axis wind turbine rotor (HAWT) is called a propeller type rotor.

The concepts of this invention with integrated rotor and rotating foundation need no yawing mechanism, and the drive train can be positioned at the bottom of the rotor. This favours the stability of the integrated rotor and floating foundation. In case of maintenance, the rotor part/foundation tube may function as an elevator shaft.

In an embodiment the torque leveler of said anchoring part comprises multiple arms connected to the shaft. The advantage of this specific embodiment is that the wind turbine can be held in position so that the thrust will not drag it away while at the same time the torque of the rotor is taken by the arms. In principle, one embodiment just needs one arm, but in this case the wind turbine may float over a larger area. A typical embodiment will use three arms connected to anchor chains.

In an embodiment the torque leveler of said anchoring part comprises a rotatable drag element connected to the generator. The advantage of this specific embodiment is that the rotor torque is counteracted by the drag element. In this case the anchoring chain can be connected directly to a shaft going through the shaft for the rotatable drag element. A disadvantage is that there are conversion losses due to the forces exerted by the drag element. These losses are proportional to the rotational speed of the rotatable drag element.

In an embodiment the torque leveler of said anchoring part comprises a generator arrangement with external turbine gondolas. The advantage of this specific embodiment is that the rotor torque is taken by the thrust of the turbine gondolas, while at the same time the turbine gondolas generate power. In this case the anchoring chain can be connected directly to the shaft in the bottom of the foundation.

In an embodiment the shaft of said generator is rotatable connected to the rotor part. In this case the generator house is mounted to the anchor part. The electric cable is in this case going out directly from the generator and do not need to be carried through the shaft. The advantage of this embodiment is that the generator part is kept separate from the rotor part, and that the generator can be detached from the foundation and the anchor part and be raised to sea level for maintenance or refurbishment. The generator must in this case be specifically designed to work under deep sea water conditions.

In an embodiment the shaft of said generator is rotatable connected to the anchoring part. In this case the generator house is mounted to the bottom and outside of the rotating foundation, and the shaft is connected to the anchoring part. The electric cable must be carried through the shaft in this case. The advantage of this embodiment is that the generator part can be detached from the foundation and the anchor part and raised to sea level for maintenance or refurbishment. The generator must in this case be specifically designed to work under deep sea water conditions.

In an embodiment the rotor part is hollow and wherein the shaft generator is positioned at the bottom of the rotor part with the shaft extending from the bottom of the rotor part. In this case the generator is working under normal atmospheric conditions. It may be separated from the shaft extending from the bottom of the rotor part. The advantage of this embodiment is that the generator is designed for normal atmospheric conditions and that it may be taken out of the foundation by using the foundation as an elevator shaft.

In an embodiment the generator delivers power to an external source via a cable through the shaft of the generator. In this case the shaft and rotor part of the generator is fixed to the anchor part and do not rotate, while the stator part of the generator rotates. The advantage of this embodiment is that the electrical parts of the generator can be limited to the rotor, which in this case keeps all electrical parts stationary fixed with the anchor part.

In an embodiment said wind turbine further comprises a water brake part for an offshore wind turbine further comprising a rotor and a floating rotating foundation, said water brake part can be activated by the safety system with drag devices in the water to counteract the torque being produced by the rotor and, when necessary, overcome the rotor torque and significantly reduce rotational speed.

The invention further relates to an anchoring part for an offshore wind turbine further comprising a rotor, a floating foundation and a shaft generator, said rotor and the main part of said floating foundation is integrated and constitutes a rotor part where energy can be generated based on the rotation of said rotor part. Said anchoring part is adapted to be rotatable connected to said rotor part via the shaft of said generator, and wherein said anchoring part further comprises a torque leveler for counterbalancing the torque from the rotating rotor part.

The invention further relates to a rotor part for an offshore wind turbine further comprising a shaft generator and an anchoring part, said anchoring part is for anchoring said wind turbine offshore to the bottom of the sea and wherein energy can be generated based on the rotation of said rotor part.

The rotor part comprises a rotor being integrated with the main part of a floating foundation.

### BRIEF DESCRIPTION OF THE DRAWINGS

In the following, preferred embodiments of the invention will be described referring to the figures, where
figures 1a-1b illustrate embodiments of offshore wind turbines according to the present invention,
figure 2 illustrates the principle of a wind turbine and its components according to the present invention,
figures 3a-3d illustrate different embodiments of the rotor of a wind turbine according to the present invention,
figures 4a-4d illustrate different embodiments of the shaft generator of a wind turbine according to the present invention,
figures 5a-5b illustrate different embodiments of the anchoring part of a wind turbine according to the present invention.
figures 6a-6b illustrate different embodiments of the water brake part of a wind turbine according to the present invention.

### DESCRIPTION OF EMBODIMENTS

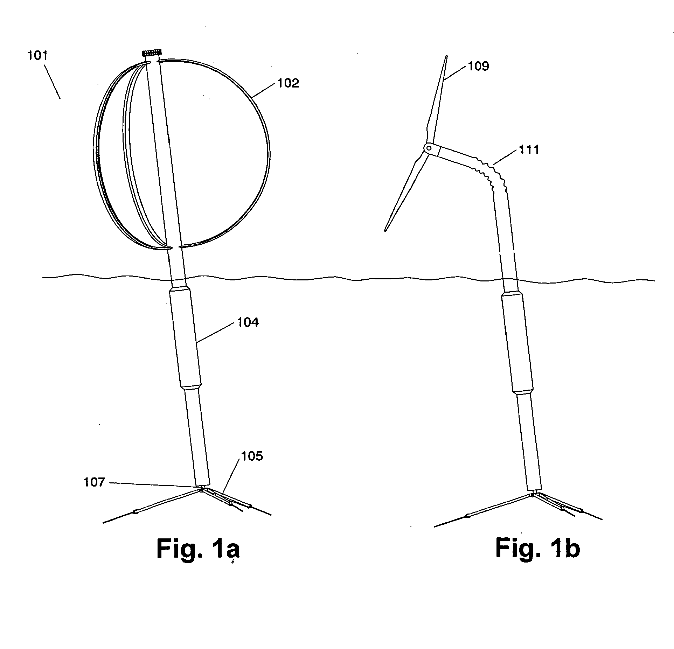

Figure 1a illustrates an offshore wind turbine 101 according to the present invention. The wind turbine is anchored to the bottom of the sea via an anchoring part 105, and the rotor part comprising both a rotor 102 and a floating foundation 104 rotates relative to an anchoring part 105 via a shaft generator 107 generating power based on the rotation.

An advantage is that there is only need for one bearing arrangement in the bottom of the construction on which it rotates being the anchoring part 105. At the bottom of the wind turbine, the shaft generator or generator/gearbox is positioned. In this way the heavy part of the construction is positioned in the bottom as opposed to the horizontal wind turbines where the nacelle or rotor is mounted at the top. The large amount of rotating mass functions as short time energy storage which may be used to reduce variations in power.

The rotating part where the floating foundation is integrated with the rotor uses the water as a supporting bearing, and the weight of the shaft generator at the bottom supports stabilization of the construction.

The invention operates in the way that the foundation is a rotor part. The wind causes the rotor to rotate, giving torque to the foundation. Additionally, the wind gives thrust that will tilt the construction. The tilt will be counterbalanced by the weight in the bottom of the foundation and by buoyancy in the upper part of the foundation. The anchoring part 105 is constructed to compensate for both the thrust load and the torque load.

Figure 1b illustrates an alternative embodiment of an offshore wind turbine according to the present invention. In this case the rotor 109 is a propeller type rotor rather than a cross wind rotor, the propeller type rotor preferably being a two-bladed stall-regulated rotor with teeter hub. The rotor part is in this case having a flexible rotor shaft 111 which is stiff in torsion and flexible in bending.

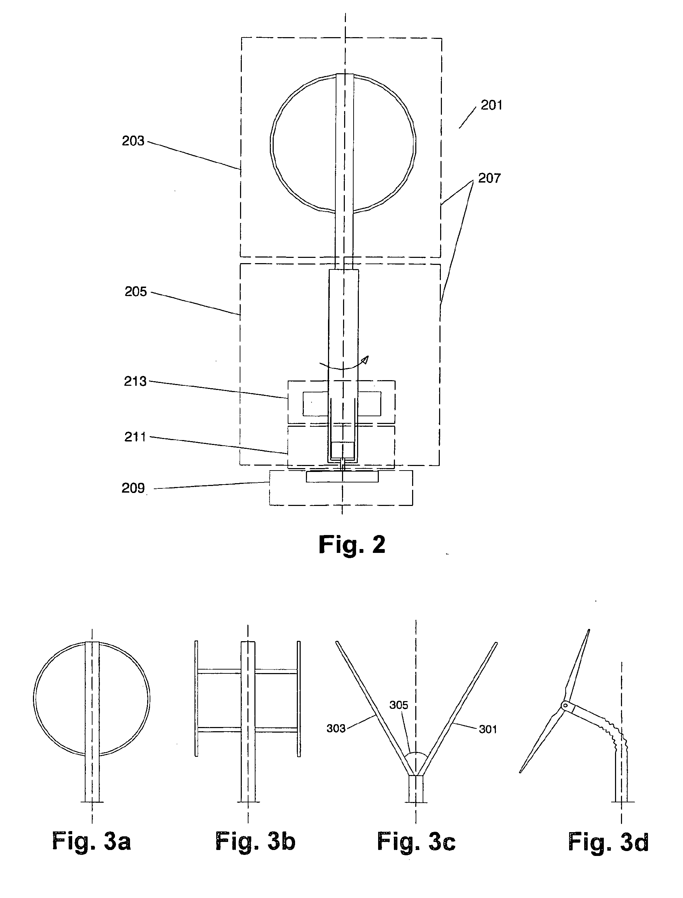

Figure 2 illustrates the principle of a wind turbine and its components according to the present invention. The wind turbine 201 comprises a roto 203 and a floating foundation part 205, where the rotor 203 and the floating foundation part 205 are integrated in a rotor part 207. The rotor part 207 is rotatable connected to an anchoring part 209, and the anchoring part 209 is fixed e.g. to the sea bed. The connection between the rotor part 207 and the anchoring part 209 is made via a power generator 211 such as a shaft generator, whereby the rotation of rotor part 207 makes the generator generate power. The rotor part 207 could in an embodiment be connected to a water brake part 213 which may be activated to counteract the torque of the wind turbine rotor 203, and which can keep the rotational speed of the rotor part down.

The shaft generator in the bottom of the floating foundation may be a permanent magnet multipole generator (PMG) or an ordinary synchronous or asynchronous generator with gearbox.

The invention uses a cross-flow or a propeller type wind turbine rotor which may be made in different ways. Examples of cross-flow wind turbine rotors are illustrated in figures 3a-3c, and an example of a propeller-type wind turbine rotor is illustrated in figure 3d.

Figure 3a illustrates an embodiment of the rotor integrated with the foundation part; in this embodiment the rotor is designed as a Darrieus rotor.

Figure 3b illustrates an embodiment of the rotor integrated with the foundation part; in this embodiment the rotor is designed as a Giromill also referred to as an H-rotor.

Figure 3c illustrates an embodiment of the rotor integrated with the foundation part. In this embodiment the rotor is designed as a V-rotor. Here the rotor comprises two blades 301, 303 and the angle 305 between these blades could be adjustable, e.g. based on a control unit for adjusting the energy output of the wind turbine.

Figure 3d illustrates an embodiment of the rotor integrated with the foundation part. In this embodiment the rotor is designed as a propeller type wind turbine including a flexible tower.

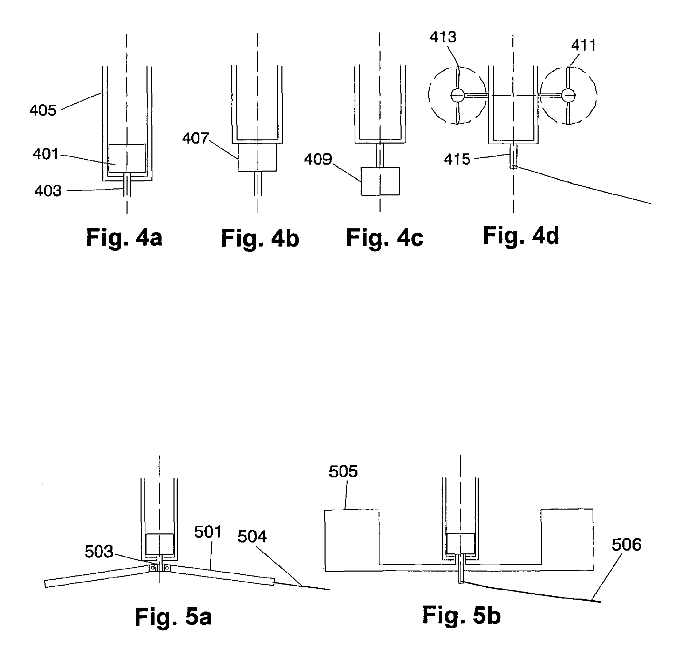

Figures 4a-4d illustrate different embodiments of the power generator of a wind turbine according to the present invention.

Figure 4a is an illustration of the bottom part of the floating foundation 405 of the wind turbine; an internal shaft generator 401 is positioned inside the hollow foundation 405 and the shaft 403 is extending through the bottom surface of the foundation 405. A sealing is provided in the bottom surface between the shaft 403 of the generator 401 and the foundation 405 to avoid or minimize water inside the foundation. The shaft 403 in the bottom may be using bearing and sealing technology from ship technology or submarine technology. The generator 401 could be connected to the grid through a cable going through the middle of the shaft to the sea bed.

Figure 4b is an illustration of the bottom part of the floating foundation of the wind turbine; a shaft generator 407 is positioned connected to the bottom surface of the foundation. This connection can be disconnected, whereby the generator can be removed for substitution or maintenance without having to move the entire rotor part.

Figure 4c is an illustration of the bottom part of the floating foundation of the wind turbine; a shaft generator 409 is mounted below the foundation where the shaft of the shaft generator is connected to the bottom of the foundation and the generator is mounted to the anchoring part.

Figure 4d is an illustration of the bottom part of the floating foundation of the wind turbine; a shaft generator is provided as a generator arrangement with turbines in the form of a number of external turbine gondolas 411, 413.

These gondolas 411, 413 comprise turbines mounted on stiff arms to the foundation, and when the foundation rotates as part of the rotor part then the turbines rotate and a shaft generator in each gondola generates power. The foundation is still rotatable mounted to the anchoring part via a shaft 415. The shaft could be a part of a shaft generator for generating power. This solution further compensates the torque load.

Figures 5a-5b illustrate different embodiments of the anchoring part of a wind turbine according to the present invention.

In figure 5a a shaft extrudes through the bottom of the foundation and is fixed to the anchoring part, e.g. in the form of three anchors. In order to compensate the torque of the rotor part, these anchors are mounted to multiple arms 501 that are connected to the shaft. Further, the arms on the shaft will compensate the torque load. The arms are in this embodiment further connected to an anchor via an anchor chain 504.

In figure 5b an alternative way to compensate the torque load is illustrated, where a rotatable drag element 505 is used which is rotating in the water. In this case a double shaft needs to be used, where the outer one connects to the generator and the inner one connects to the anchor chain 504.

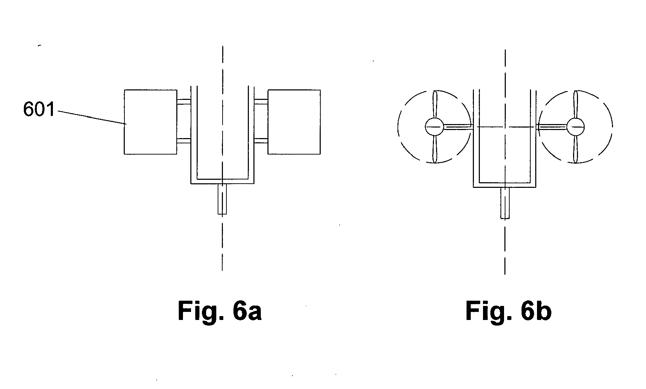

Figures 6a-6b illustrate different embodiments of the water brake part of a wind turbine according to the present invention.

Figure 6a illustrates drag elements 601 being activated from the rotor part and extending into the water. These devices may be mounted on the outside of the rotor part and being shaped to give as little drag as possible when not activated.

Figure 6b illustrates the turbine gondolas 411, 413 also described in connection with figure 4d being used as a water brake part. In this case the turbine gondolas are regulated to produce maximum drag.

The wind turbine is made of materials with a cost-efficient construction as in compliance with figure 2 showing the different parts of the invention: VAWT rotor part, floating foundation part, power generation part and anchor part.

The rotor tube can be made of high quality steel, aluminium, glass-fibre reinforced polyester or equivalent material with properties satisfying the technical needs. The blade material is made likely from aluminium alloys, glass-fibre reinforced polyester, glass-fibre/carbon hybrids or equivalent strong and light material. It is likely that pre-tensioned concrete also has technical potential to be used in the design of the rotor tube for the blade carrying part.

The floating foundation can be made of high quality steel, if needed of noncorrosive steel, aluminium alloys or pre-tensioned concrete. It is most likely that pre-tensioned concrete has the highest technical potential to be used for the construction material for the foundation. It is also technically feasible that glass-fibres and new materials conforming to strength and durability better than steel can be used for this part.

The counterweight in the lowest part of the foundation can be made with materials of high density like concrete, olivine or similar materials. The counterweight should not be not displaced and kept in a mechanical stable condition during non- and rotating operation.

The wind turbine utilizing a PMG as the technical means to convert from mechanical into electrical energy is available in a variety of products - a solution which permit to place a PMG in the very low part of the floating foundation in close proximity with the anchoring device. A specific solution is a deep-water PMG that has an internal pressure that balances the water pressure at the specific water depth.

The size of the wind turbine is dependent on the water depth. The depth of the foundation is likely to be of the order of the rotor tube, and this puts restrictions for positioning of the wind turbine on deep sea areas. Depending on the actual height to diameter ratio of the design chosen, the swept area is in the order of 500m² for a 200kW rotor, 2500 m² for a 1 MW and 12.500m² for a 5MW rotor. For a power range from 200 kW, over 1 MW to 5 MW, the rotor tube ranges from about 27m over 61 m to approximately 136m in rotor height for rotors with diameter to height ratio of 1. When the foundation is designed with the same foundation depth as the rotor tube size and adding additional free water to the sea bed, the minimum water depths are in the order of 30m for 200kW, 70m for 1 MW and 150m for 5MW sizes of the wind turbine concept.

The anchoring has two tasks. One task is to take the thrust load from the wind turbine rotor and to keep the wind turbine in position so that it does not float away or float over a large area. The other task is to take the reaction forces due to the rotor torque. In some cases, parts of the torque or the whole torque is taken by a drag device that rotates in the water, and in this case the anchor arms that take the rotor torque may be reduced significantly. The weight of the anchor chain is adding to the weight of the whole construction. The resulting force on the anchor chain will therefore be in a more downwards direction than if it was weightless. This will add a downwards force to the foundation when the wind turbine is loaded. This force is taken into account in designing the buoyancy forces at sea level Typically, three anchors will be connected to a wind turbine, and the three anchors will be mounted to each anchor foundation on the sea bed. In a wind farm configuration, the anchor foundations on the sea bed will typically be put in a hexagonal pattern, where the distances between the anchor foundations are determined by the distance between the row of wind turbines and the side by side distance.

The water brake part has a safety function. When drag devices are activated in the water, the rotational speed is kept down such that overloading is avoided. The drag devices may be mounted on the outside of the foundation being smooth with the foundation when not activated. The drag devices may also be mounted inside the foundation when not activated and extend from the foundation when activated. The drag devices may also be a drag device as illustrated in figure 5b, where the drag device is clamped with the foundation when activated.

The production of the wind turbine units (including foundation) can be made at sites where water depths corresponding to the construction sizes are available, and from here the units can be towed into installation position on the sea. Alternatively, the foundations may be towed horizontally, and at the installation position they are tilted with the use of the ballast into vertical position, and afterwards the rotor is mounted onto the foundation.

In case of a cross-flow, wind turbine maintenance is made through access from the top of the rotor tube. A platform on the top of the tube is free from blades etc. (this is not the case for a propeller type wind turbine) for lowering of personnel from helicopter to the turbine. Access to the inner parts of the unit is through the rotor tube by stairs or elevator. A crane may be mounted at the top for lifting parts out from the bottom of the foundation. Access to the blade joints may be possible by stairs on the outside of the rotor tube. In case the generator is external to the integrated wind turbine rotor and foundation, the generator may be dismantled and lifted to a surface vehicle.

In case of high wind conditions there may be very rough waves. Situations of significant wave heights shall be taken into account, and the surface level tube section shall be dimensioned so that waves do not reach the rotor blades. The surface level tube section shall also be dimensioned to withstand significant waves. This means that the tube diameter shall be as small as possible to keep the wave loads small, but at the same time be as large as possible to account for the bending moment from the direct thrust loads and for an added buoyancy force that accounts for the indirect downwards reaction force from the thrust.

## Claims

1. An offshore wind turbine (201) comprising a rotor (203), a floating and rotating foundation (205), an anchoring part (209) and a shaft generator wherein said wind turbine is anchored offshore to the sea bed by said anchoring part, **characterized in that** said rotor and the main part of said floating foundation are integrated and constitute a rotor part (207) supported by the water, where energy can be generated based on the rotation of said rotor part, and wherein said rotor part and said anchoring part are rotatable connected via the shaft of said generator, and wherein said anchoring part comprises a torque leveler (501, 505) for compensating the torque from the rotating rotor part.

2. An offshore wind turbine according to claim 1, wherein the torque leveler of said anchoring part comprises multiple arms (501) connected to the shaft.

3. An offshore wind turbine according to claim 1, wherein the torque leveler of said anchoring part comprises a rotatable drag element (505).

4. An offshore wind turbine according to claim 1, wherein the torque leveler of said anchoring part comprises generator arrangement with external turbine gondolas (411, 413).

5. An offshore wind turbine according to claims 1-4, wherein the shaft of said generator is rotatable connected to the rotor part.

6. An offshore wind turbine according to claims 1-4, wherein the shaft of said generator is rotatable connected to the anchoring part.

7. An offshore wind turbine according to claims 1-6, wherein the rotor part is hollow, and wherein the shaft generator is positioned at the bottom of the rotor part with the shaft extending from the end of the rotor part.

8. An offshore wind turbine according to claims 1-7, wherein the generator delivers power to an external source via a cable through the shaft of the generator.

9. An offshore wind turbine according to claims 1-8, wherein said wind turbine further comprises a water brake part (601, 411,413).

10. An anchoring part (209) for an offshore wind turbine further comprising a rotor (203), a floating foundation (205) and a shaft generator (211), said rotor and the main part of said floating foundation are integrated and constitute a rotor part (207) where energy can be generated based on the rotation of said rotor part, **characterized in that** said anchoring part is adapted to be rotatable connected to said rotor part via the shaft of said generator, and wherein said anchoring part further comprises a torque leveler (501, 505) for counterbalancing the torque from the rotating rotor part.

11. An anchoring part according to claim 10, wherein the torque leveler comprises multiple arms (501) connected to the shaft.

12. An anchoring part according to claim 10, wherein the torque leveler comprises a rotatable drag element (505).

13. An anchoring part according to claim 10, wherein the torque leveler comprises generator arrangement with external turbine gondolas (411, 413).

14. An anchoring part according to claims 10-13, wherein the anchoring part further comprises said shaft generator.

15. A rotor part (207) for an offshore wind turbine further comprising a shaft generator (211) and an anchoring part (209), said anchoring part is for anchoring said wind turbine offshore to the bottom of the sea and wherein energy can be generated based on the rotation of said rotor part, **characterized in that** said rotor part comprises a rotor being integrated with the main part of a floating foundation, wherein said rotor part is adapted to be rotatable connected to said anchoring part via the shaft of said generator.

16. A rotor part according to claim 15, wherein the rotor part further comprises said shaft generator.

17. A rotor part according to claim 16, wherein the rotor part is hollow and wherein the shaft generator is positioned at the bottom of the rotor part with the shaft extending from the end of the rotor part.

18. A rotor part according to claims 15-17, wherein said rotor part further comprises a water brake part (601, 411,413).
